# EUROPÄISCHE PATENTSCHRIFT

(11) **EP 1 297 250 B1**
(45) Veröffentlichungstag und Bekanntmachung des Hinweises auf die Patenterteilung: **23.11.2005**
(21) Anmeldenummer: 01967103.1
(22) Anmeldetag: 28.06.2001
(51) Int. Cl.: F02D 41/22, F02D 41/14

(54) **DIAGNOSEFUNKTION FÜR EINE BRENNKRAFTMASCHINE**
DIAGNOSTIC FUNCTION FOR AN INTERNAL COMBUSTION ENGINE
FONCTION DE DIAGNOSTIC POUR UN MOTEUR A COMBUSTION INTERNE

(30) Priorität: 01.07.2000 DE 10032110
(43) Veröffentlichungstag der Anmeldung: 02.04.2003
(73) Patentinhaber: MTU FRIEDRICHSHAFEN GMBH, 88040 Friedrichshafen (DE)
(72) Erfinder: DÖLKER, Armin, 88090 Immenstaad (DE); SPÄGELE, Thomas, 88069 Tettnang (DE)
(86) Internationale Anmeldenummer: PCT/EP2001/007393
(87) Internationale Veröffentlichungsnummer: WO 2002/002922

(56) Entgegenhaltungen:
- EP-A- 0 814 251
- DE-A- 19 742 083
- DE-A- 19 953 767

## Beschreibung

Die Erfindung betrifft eine Diagnosefunktion für eine Brennkraftmaschine, deren Leistung über ein leistungsbestimmendes Signal eingestellt wird. Hierzu wird aus einer SollwertVorgabe mittels einer Bestimmungs-Einrichtung ein erstes Signal bestimmt. Mittels eines Moment-Reglers wird aus dem Motor-Moment ein zweites Signal bestimmt. Über ein Auswahlmittel wird sodann die Bestimmungs-Einrichtung oder der Moment-Regler als dominant für das leistungsbestimmende Signal gesetzt.

Aus der von der Anmelderin stammenden nicht vorveröffentlichten deutschen Anmeldung mit dem amtlichen Aktenzeichen 19953767.4, ist eine Regelkreisstruktur der oben genannten Ausführung bekannt. Bei dieser entspricht beispielsweise die Bestimmungs-Einrichtung dem Drehzahl-Regler. Mittels des Drehzahl-Reglers wird aus einer Drehzahl-Sollwert-Vorgabe das erste Signal, beispielsweise eine erste Einspritzmenge, bestimmt. Ein Moment-Regler bestimmt aus dem Motor-Moment und einem maximal zulässigen Moment ein zweites Signal, beispielsweise eine zweite Einspritzmenge. Über das Auswahlmittel wird nun derjenige Regler als dominant gesetzt, dessen berechnete Einspritzmenge am geringsten ist. Durch diese Regelkreisstruktur wird die Brennkraftmaschine wirkungsvoll vor Überlast geschützt. Ein Fehler in der Moment-Erfassung oder -Berechnung ist bei dieser Regelkreisstruktur jedoch noch nicht berücksichtigt.

Der Erfindung liegt insofern die Aufgabe zu Grunde, das Regelsystem um eine Ausfallabsicherung zu ergänzen.

Die Aufgabe wird gelöst, indem bei nicht plausiblen Werten des Motor-Moments ein Fehlermodus gesetzt wird. Mit Setzen des Fehlermodus wird bei dominanter Bestimmungs-Einrichtung die Dominanz beibehalten. Bei dominantem Moment-Regler wird sodann ein Wechsel in der Dominanz durchgeführt. Gemäß Anspruch 2 erfolgt der Wechsel der Dominanz nach einer Übergangsfunktion. In Ausgestaltung hierzu ist es vorgesehen, dass das Motor-Moment vom letzten plausiblen Wert auf Null geführt oder alternativ das zweite Signal vom letzten Wert auf einen hohen Wert geführt wird. Die erfindungsgemäße Lösung und deren Ausgestaltungen bieten den Vorteil, dass ein Ausfall in der Moment-Erfassung nicht zu einem unkontrollierten Verhalten der Brennkraftmaschine führt. Mit anderen Worten: Auch bei Ausfall der Moment-Erfassung wird ein reduzierter Normalbetrieb der Brennkraftmaschine gewährleistet, indem die Berechnung des leistungsbestimmenden Signals kontinuierlich fortgesetzt wird. Über die Einführung der Übergangsfunktion wird bei einem Wechsel in der Dominanz ein sprungförmiger Verlauf des leistungsbestimmenden Signals verhindert. Unter leistungsbestimmendem Signal ist im Sinne der Erfindung eine Einspritzmenge oder ein Regelweg einer Regelstange zu verstehen.

Eine weitere Schutzmaßnahme der Brennkraftmaschine bei Ausfall der Moment-Erfassung besteht darin, dass mittels der Diagnosefunktion eine Grenzwert-Kurve des maximal zulässigen ersten Signals adaptiert wird. Diese Grenzwert-Kurve wird zu kleineren Werten des ersten Signals adaptiert. Die Brennkraftmaschine wird hierdurch auf einem sicheren Leistungsniveau betrieben, indem beispielsweise die Einspritzmenge reduziert wird.

Auf sporadisch auftretende Fehler in der Moment-Erfassung wird durch eine entsprechende Rückkehrfunktion innerhalb der Diagnosefunktion reagiert. Sobald plausible Moment-Werte wieder vorliegen und eine Zeitstufe abgelaufen ist, erfolgt die Rückkehr zur Normalfunktion.

In den Figuren ist ein bevorzugtes Ausführungsbeispiel dargestellt. Es zeigen:
- Figur 1: Ein Systemschaubild
- Figur 2A, 2B: Regelkreisstruktur mit einem Drehzahl- und Moment-Regler
- Figur 3A, 3B: Regelkreis mit Steuerung
- Figur 4: Blockschaltbild Drehzahl-Regler
- Figur 5: Ein Zeitdiagramm
- Figur 6: Einen Programmablaufplan

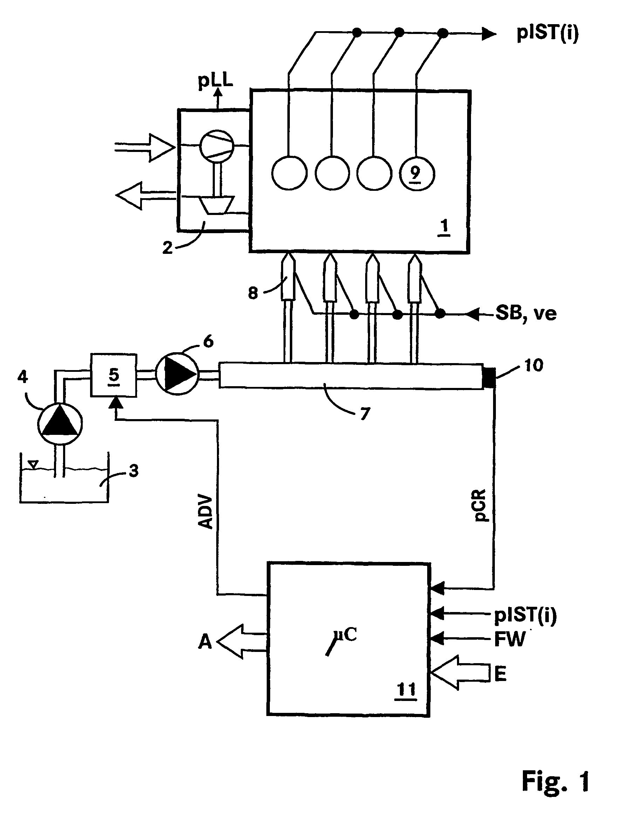

In Figur 1 ist ein Systemschaubild einer Brennkraftmaschine mit Speichereinspritzsystem (Common-Rail) dargestellt. Dieses zeigt eine Brennkraftmaschine 1 mit Turbolader und Ladeluftkühler 2, ein elektronisches Motorsteuergerät 11, eine erste Pumpe 4, eine zweite Pumpe 6, einen Hochdruckspeicher (Rail) 7, daran angeschlossene Injektoren 8 und ein

Drosselventil 5. Die erste Pumpe 4 fördert aus einem Kraftstofftank 3 den Kraftstoff via dem Drosselventil 5 zur zweiten Pumpe 6. Diese wiederum fördert den Kraftstoff unter hohem Druck in den Hochdruckspeicher 7. Das Druckniveau des Hochdruckspeichers 7 wird über einen Rail-Drucksensor 10 erfasst. Aus dem Hochdruckspeicher 7 zweigen Leitungen mit daran angeschlossenen Injektoren 8 für jeden Zylinder der Brennkraftmaschine 1 ab.

Das elektronische Motorsteuergerät 11 steuert und regelt den Zustand der Brennkraftmaschine 1. Dieses weist die üblichen Bestandteile eines Mikrocomputersystems auf, beispielsweise Mikroprozessor, I/O-Bausteine, Puffer und Speicherbausteine (EEPROM, RAM). In den Speicherbausteinen sind die für den Betrieb der Brennkraftmaschine 1 relevanten Betriebsdaten in Kennfeldern/Kennlinien appliziert. Die in Figur 1 exemplarisch dargestellten Eingangsgrößen des elektronischen Motorsteuergeräts 11 sind: Verbrennungs-Höchstdruck pIST(i), der mittels Drucksensoren 9 gemessen wird, Druck pCR des Hochdruckspeichers 7, sowie ein den Leistungswunsch darstellendes Signal FW. Die weiteren für den Betrieb der Brennkraftmaschine 1 relevanten Eingangsgrößen sind mit dem Bezugszeichen E dargestellt. Als Ausgangsgrößen A des elektronischen Motorsteuergeräts 11 sind die Ansteuersignale für die Injektoren 8, entsprechend dem Einspritzbeginn SB, einem leistungsbestimmenden Signal ve und das Ansteuersignal ADV für das Drosselventil 5 dargestellt. Über das Drosselventil 5 wird der Zulauf zur zweiten Pumpe 6 eingestellt.

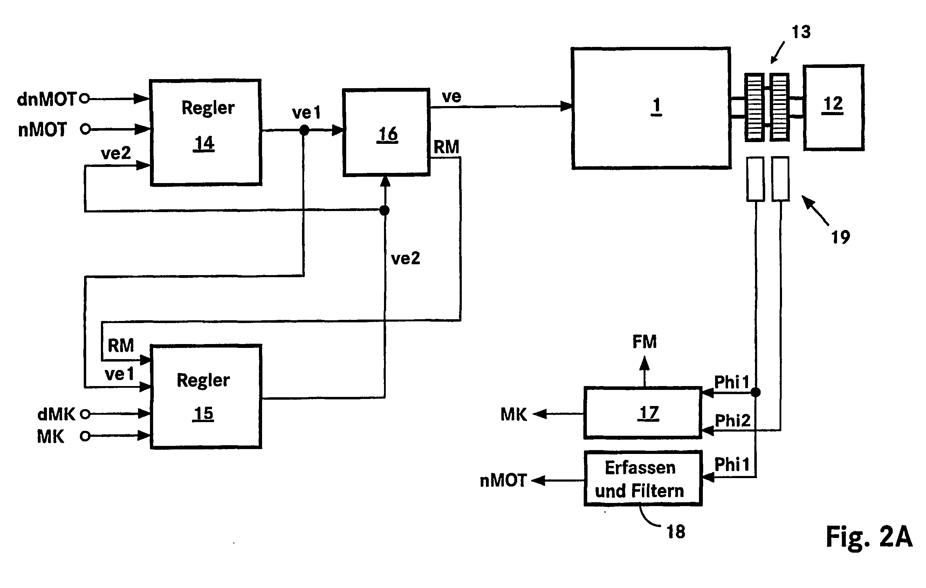

Figur 2A zeigt ein Blockschaltbild des Regelsystems der Brennkraftmaschine 1 mit gekoppelter Regelkreisstruktur. Dargestellt sind: ein Drehzahl-Regler 14, ein Moment-Regler 15, ein Auswahlmittel 16 und die Brennkraftmaschine 1 mit dem Einspritzsystem. Die Brennkraftmaschine 1 treibt via einer Kupplung 13 eine Motorlast 12 an, zum Beispiel einen Waterjet-Antrieb. Die Zahnwinkel Phi1 und Phi2 der Kupplung 13 werden von Drehzahlsensoren 19 detektiert. Aus dem Zahnwinkel Phi1 wird über einen Funktionsblock Erfassen/Filtern 18 die Motordrehzahl nMOT berechnet. Aus den beiden Zahnwinkeln Phi1 und Phi2 wird das Motor-Moment MK im Diagnoseblock 17 ermittelt und bewertet.

Die Eingangsgrößen des Drehzahl-Reglers 14 sind: die Motordrehzahl nMOT, eine Drehzahldifferenz dnMOT und ein Signal ve2, nachfolgend als zweites Signal bezeichnet.

Die Drehzahldifferenz berechnet sich aus der Motordrehzahl nMOT und einem den Leistungswunsch kennzeichnenden Drehzahl-Sollwert nMOT(SW). Das zweite Signal ve2 entspricht dem Ausgangssignal des Moment-Reglers 15. Die Ausgangsgröße des Drehzahl-Reglers 14 ist ein erstes Signal ve1, beispielsweise eine Einspritzmenge. Dieses ist auf das Auswahlmittel 16 und den Moment-Regler 15 geführt. Die Eingangsgrößen des Moment-Reglers 15 sind: das Motor-Moment MK, ein Differenzmoment dMK, das erste Signal ve1 und ein Reglermodus RM. Das Differenzmoment dMK berechnet sich aus der Abweichung des Motor-Moments MK zu einem maximal zulässigen Motor-Moment. Das Ausgangssignal des Moment-Reglers 15 ist das zweite Signal ve2. Dieses ist auf das Auswahlmittel 16 und den Drehzahl-Regler 14 geführt.

Über das Auswahlmittel 16 wird festgelegt, welcher der beiden Regler 14 bzw. 15 dominant ist. Hierzu enthält das Auswahlmittel 16 eine Minimalwertauswahl. Über die Minimalwertauswahl wird als leistungsbestimmendes Signal ve das erste Signal ve1 gesetzt, wenn das erste Signal ve1 kleiner oder gleich dem zweiten Signal ve2 ist. Für diesen Fall wird der Reglermodus RM auf einen ersten Wert gesetzt. Dies entspricht einem Betrieb der Brennkraftmaschine im Drehzahl-Modus. Als leistungsbestimmendes Signal ve wird das zweite Signal ve2 gesetzt, wenn dieses kleiner als das erste Signal ve1 ist. In diesem Fall wird der Reglermodus RM auf einen zweiten Wert gesetzt. Dies entspricht einem Betrieb der Brennkraftmaschine im Moment-Begrenzungs-Modus. Die Ausgangssignale des Auswahlmittels 16 sind das leistungsbestimmende Signal ve und der Reglermodus RM. Das leistungsbestimmende Signal ve wird auf die Einspritzeinrichtung der Brennkraftmaschine 1 geführt. Unter leistungsbestimmendem Signal ve ist im Sinne der Erfindung die Einspritzmenge oder der Regelweg einer Regelstange zu verstehen.

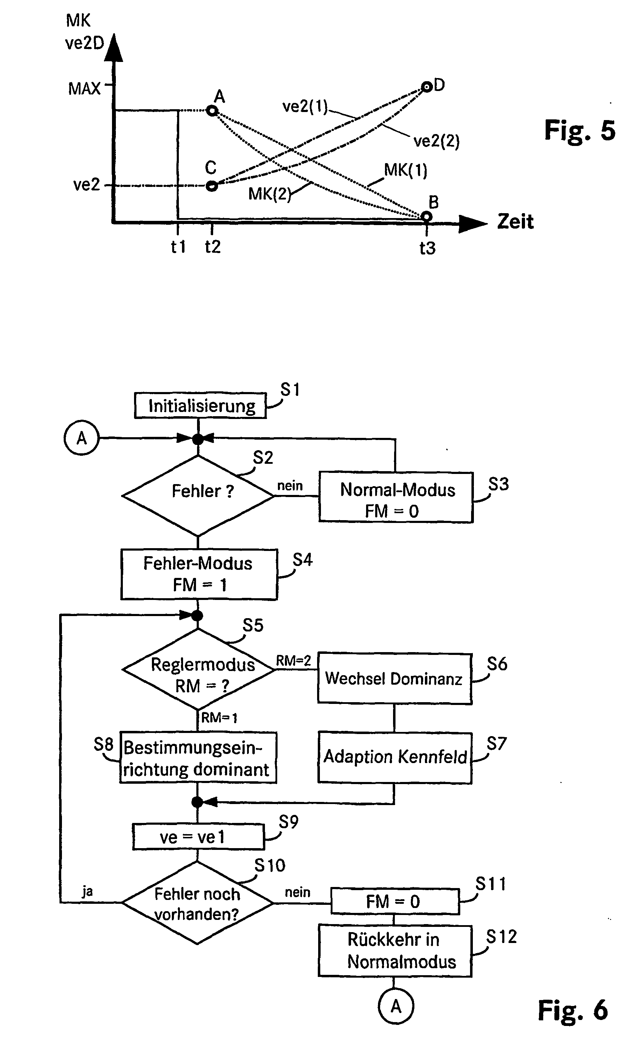

Der Ablauf des Verfahrens ist folgendermaßen: Mit Erkennen von nicht plausiblen Werten des Motor-Moments MK setzt der Diagnoseblock 17 einen Fehlermodus FM auf Eins. Nicht plausible Werte liegen beispielsweise vor, wenn das Signal Phi1 auf Grund von Leitungsunterbrechung fehlt. Mit Setzen des Fehlermodus FM führt der Diagnoseblock 17 das Motor-Moment MK vom letzten plausiblen Wert gemäß einer Übergangsfunktion auf Null. Die Übergangsfunktion kann hierbei als mathematische Funktion oder über ein Filter ausgeführt sein. Diese Übergangsfunktion ist in Figur 5 dargestellt und wird in Verbindung mit dieser erläutert. Durch das sich nun verringernde Motor-Moment MK berechnet der Moment-Regler 15 einen größeren Wert des zweiten Signals ve2. Der Diagnoseblock 17 wirkt folglich indirekt auf das zweite Signal ve2 ein.

In Konsequenz ergibt sich hieraus, dass bei dominantem Drehzahl-Regler 14 dieser weiterhin dominant bleibt. Bei dominantem Moment-Regler 15 wird das zweite Signal ve2 solange vergrößert, bis dieses den Wert des ersten Signals ve1 erreicht. Dann erfolgt ein Übergang in der Dominanz vom Moment- auf den Drehzahl-Regler.

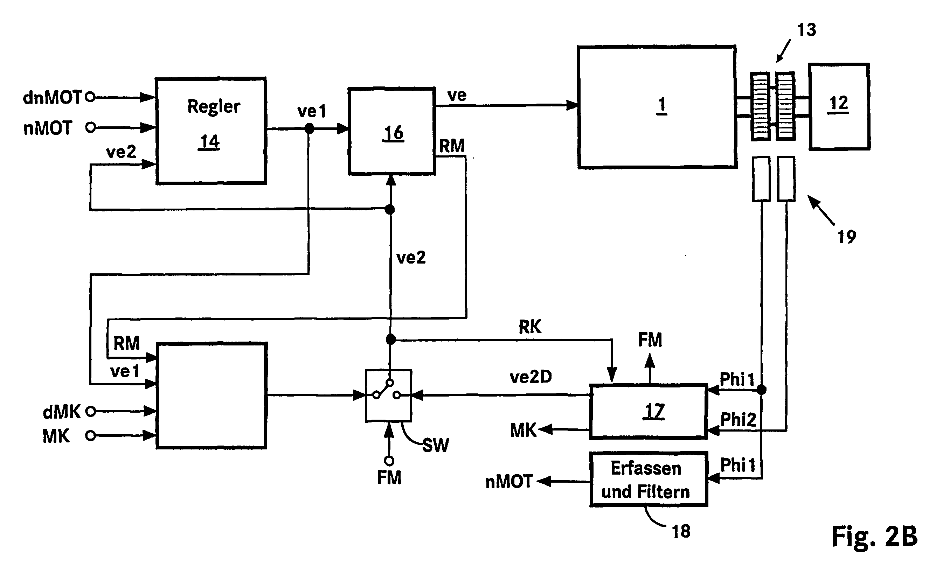

In Figur 2B ist eine Alternative zur Figur 2A dargestellt. Bei dieser Alternative ist ein Software-Schalter SW vorgesehen. Der Software-Schalter SW wird vom Signal Fehlermodus FM angesteuert. Im Normalbetrieb, Fehlermodus FM gleich Null, befindet sich der Software-Schalter SW in der gekennzeichneten Stellung. In dieser Stellung entspricht das zweite Signal ve2 dem Ausgangssignal des Moment-Reglers 15. Über einen Rückkopplungs-Pfad RK ist das zweite Signal ve2 auf den Diagnoseblock 17 geführt. Der Rückkopplungs-Pfad RK ist nur im Normalbetrieb aktiviert. Der Wert des Signals ve2D entspricht dem Wert des zweiten Signals ve2. Bei nicht plausiblen Werten des Motor-Moments MK setzt der Diagnoseblock 17 den Fehlermodus FM auf Eins. Hierdurch ändert sich die Stellung des Software-Schalters SW. In dieser Stellung wird das zweite Signal ve2 über das Signal ve2D des Diagnoseblocks 17 bestimmt. Da über den Rückkopplungs-Pfad RK das Signal ve2D dem zweiten Signal ve2 nachgeführt wird, tritt keine sprungförmige Änderung des Verlaufs des zweiten Signals ve2 bei Änderung der Stellung des Software-Schalters SW auf. Mit Setzen des Fehlermodus führt der Diagnoseblock 17 das zweite Signal ve2 gemäß einer Übergangsfunktion auf einen maximalen Wert MAX.

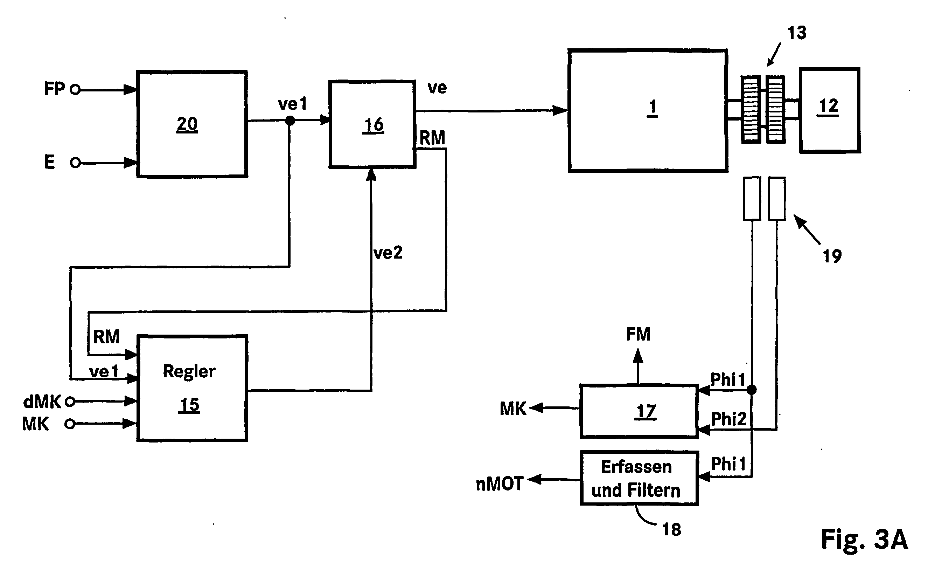

Figur 3A zeigt eine alternative Ausführung des Blockschaltbildes der Figur 2A. Im Unterschied zur Figur 2A wird bei diesem Blockschaltbild das Signal ve1 über einen Funktionsblock 20 in Abhängigkeit eines Leistungswunsches, hier Fahrpedal FP, berechnet. Der Funktionsblock 20 beinhaltet die Umrechnung der Fahrpedalstellung in das erste Signal ve1. Hierzu sind entsprechende Kennlinien einschließlich einer Grenzwert-Kurve (DBR-Kurve) vorgesehen. Die für die Umrechnung erforderlichen Eingangsgrößen sind mit dem Bezugszeichen E dargestellt, beispielsweise Motordrehzahl nMOT, Ladeluftdruck pLL usw.. Der weitere Aufbau und die Funktionalität entspricht dem der Figur 2A, so dass das dort Gesagte auch hier gilt.

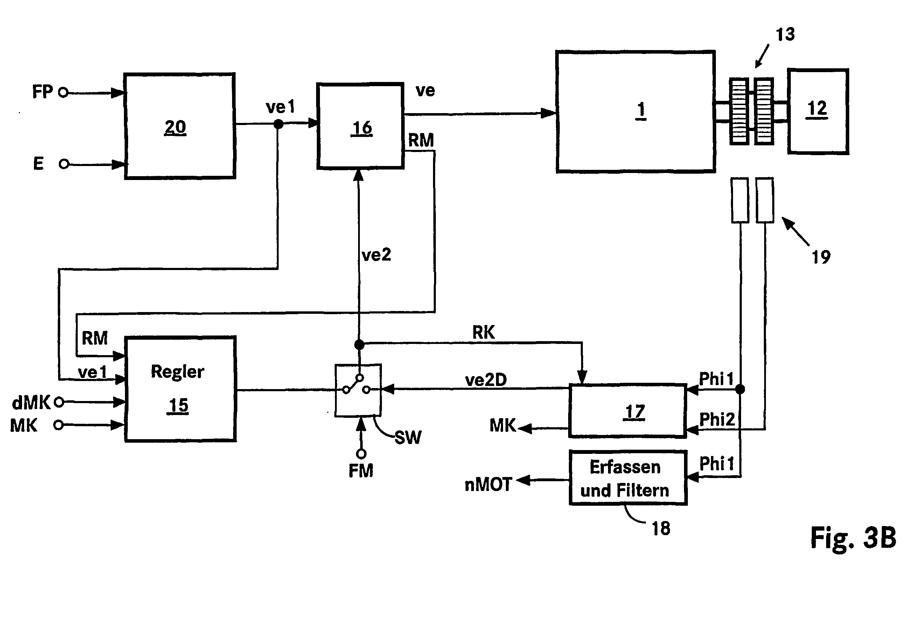

Figur 3B zeigt eine alternative Ausführung des Blockschaltbildes der Figur 2B. Im Unterschied zur Figur 2B wird bei diesem Blockschaltbild das Signal ve1 über einen Funktionsblock 20 in Abhängigkeit eines Leistungswunsches, hier Fahrpedal FP, berechnet. Der Funktionsblock 20 beinhaltet die Umrechnung der Fahrpedalstellung in das erste Signal ve1. Hierzu sind entsprechende Kennlinien einschließlich einer Grenzwert-Kurve (DBR-Kurve) vorgesehen. Die für die Umrechnung erforderlichen Eingangsgrößen sind mit dem Bezugszeichen E dargestellt, beispielsweise Motordrehzahl nMOT, Ladeluftdruck pLL usw.. Der weitere Aufbau und die Funktionalität entspricht dem der Figur 2B, so dass das dort Gesagte auch hier gilt.

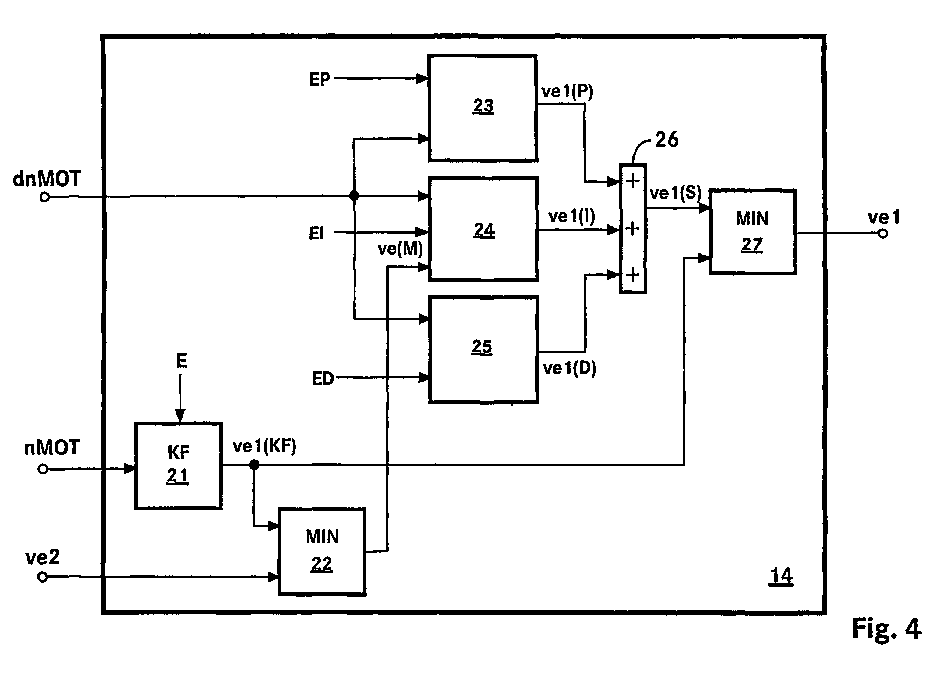

In Figur 4 ist der Drehzahl-Regler 14 dargestellt. Dieser weist einen integrierenden Anteil auf und ist exemplarisch als PID-Regler dargestellt. In der Praxis kann der Drehzahl-Regler auch als PI- oder PI(DT1)-Regler ausgeführt sein.
Die Eingangsgrößen des Drehzahl-Reglers 14 sind: die Drehzahldifferenz dnMOT, die Motordrehzahl nMOT und das zweite Signal ve2.
Der dargestellte Drehzahl-Regler beinhaltet drei Funktionsblöcke zur Berechnung des P-, I-und D-Anteils, entsprechend den Bezugszeichen 23 bis 25. Über den Funktionsblock 23 wird aus einer Eingangsgröße EP und der Drehzahldifferenz dnMOT der P-Anteil ve1(P) ermittelt. Über den Funktionsblock 24 wird aus der Drehzahldifferenz dnMOT, einem ersten Eingangssignal ve(M) und einem zweiten Eingangssignals EI, der I-Anteil ve1(I) berechnet. Hierbei ist der I-Anteil ve1(I) auf das erste Eingangssignal ve(M) begrenzt. Über den Funktionsblock 25 wird aus der Drehzahldifferenz dnMOT und einer Eingangsgröße ED der D-Anteil ve1(D) berechnet. Das erste Eingangssignal ve(M) entspricht entweder dem zweiten Signal ve2 oder einem Signal ve1(KF), je nachdem, welches Signal die geringere Wertigkeit aufweist. Hierzu ist ein erster Funktionsblock Minimalwert 22 vorgesehen. Das Signal ve1(KF) wiederum wird aus der Motordrehzahl nMOT und weiteren Eingangsgrößen E über Kennfelder 21 bestimmt. Ebenfalls enthalten ist eine Grenzwert-Kurve (DBR-Kurve). Die weiteren Eingangsgrößen sind als Sammelbezugszeichen E dargestellt. Die Eingangsgrößen E können beispielsweise der Ladeluftdruck pLL, die Motordrehzahl nMOT usw. sein. Alle drei Anteile, d. h. ve1(P) und ve1(I) und ve1(D), werden über eine Summation 26 zu einem gemeinsamen Signal ve1(S) summiert. Über den zweiten Funktionsblock Minimalwert 27 wird sodann aus diesem Signal ve1(S) und aus dem Signal ve1(KF) dasjenige ausgewählt, welches die geringste Wertigkeit aufweist. Dieses Signal entspricht dem ersten Signal ve1.

Das vom Moment-Regler 15 berechnete zweite Signal ve2 beeinflußt die Berechnung des integrierenden Anteils ve1(I) des Drehzahl-Reglers 14. Um eine direkte Rückkopplung des Ausgangs des Drehzahl-Reglers 14 auf den integrierenden Anteil ve1(I) des Drehzahl-Reglers 14 via Moment-Regler 15 zu vermeiden, kann eine Filterung des zweiten Signals ve2 vorgesehen sein. Bei nicht plausiblen Werten des Motor-Moments MK wird der Fehlermodus FM gesetzt. Dieser bewirkt, dass über die Diagnosefunktion das zweite Signal ve2 erhöht wird. Durch den Minimalwert 22 kommt, selbst bei Dominanz des Moment-Reglers 15, das Signal ve1(KF) zum Tragen. Um die Brennkraftmaschine vor zu hohen Werten des Signals ve1(KF) zu schützen, beispielsweise zu hoher Kraftstoffmenge, wird über die Kennfelder 21 das Signal ve1(KF) zu kleineren Werten adaptiert. Dies erfolgt indem eine Grenzwert-Kurve (DBR-Kurve) der Kennfelder 21 verändert wird.

In Figur 5 ist ein Zeitdiagramm dargestellt. Hierbei ist auf der Abszisse die Zeit bzw. auf der Ordinate das Motor-Moment MK und das zweite Signal ve2D aufgetragen. Als durchgezogene Linie ist hierbei das gemessene Motor-Moment MK dargestellt. Als gestrichelte Linien sind die vom Diagnoseblock 17 ausgegebene Motor-Momente MK (1) bzw. MK (2) dargestellt. Als strichpunktierte Linie ist die alternative Lösung dargestellt, bei der der Diagnoseblock 17 das zweite Signal ve2 über das Signal ve2D vergrößert. Zum Zeitpunkt t1 fällt das Motor-Moment MK vom Wert des Punktes A auf Null ab, beispielsweise auf Grund eines Sensorausfalls. Ab dem Zeitpunkt t1 bleibt dieses sodann auf Null. Zu einem Zeitpunkt t2 erkennt die Diagnosefunktion, dass das Motor-Moment MK nicht mehr plausibel ist. Danach führt die Diagnosefunktion den Wert des Motor-Moments MK gemäß einer Übergangsfunktion auf den Wert Null, Punkt B zum Zeitpunkt t3. Diese Übergangsfunktion kann in einer ersten Ausführung als lineare Funktion MK (1) ausgeführt sein. Alternativ kann diese Übergangsfunktion auch entsprechend einer Filterfunktion MK (2), mit einem parabelförmigen Verlauf, ausgeführt sein. Die Verringerung des vom Diagnoseblock 17 ausgegebenen Motor-Moments MK (1) bzw. MK (2) bewirkt in Konsequenz eine Vergrößerung des zweiten Signals ve2. Der Diagnoseblock 17 wirkt somit indirekt auf das zweite Signal ve2.

In einer alternativen Ausführung ist vorgesehen, dass der Diagnoseblock 17 direkt auf das zweite Signal ve2 einwirkt, entsprechend den Figuren 2B und 3B. Diese Ausführung ist in Figur 5 als strichpunktierte Linie dargestellt. Zum Zeitpunkt t2 erkennt die Diagnosefunktion, dass das Motor-Moment MK nicht plausibel ist. Als Folgereaktion wird das Signal ve2 gemäß der Übergangsfunktion vom Wert des Punktes C auf den Wert des Punktes D, Zeitpunkt t3, mittels des Signals ve2D geführt. Der zeitliche Verlauf zwischen den beiden Punkten C und D kann als mathematische Funktion oder Filterfunktion ausgeführt sein, Signalverlauf ve2(1) und ve2(2).

In Figur 6 ist ein Programmablaufplan der Diagnosefunktion dargestellt. Bei Schritt S1 wird die Funktion initialisiert und Anfangswerte gesetzt. Im Schritt S2 wird geprüft, ob ein Fehler erkannt wurde, das heißt, ob das Motor-Moment MK plausibel ist. Wurde kein Fehler erkannt, so wird bei Schritt S3 der Normal-Modus (FM = 0) gesetzt und eine Warteschleife durchlaufen. Wurde bei Schritt S2 ein Fehler erkannt, so wird bei Schritt S4 der Fehler-Modus (FM = 1) gesetzt. Im Schritt S5 wird der Regler-Modus RM abgefragt. Der Regler-Modus RM entspricht 1, wenn die Bestimmungs-Einrichtung, also der Drehzahl-Regler 14 oder der Funktionsblock 20, dominant ist. Für diesen Fall bleibt dieser Modus erhalten, Schritt S8. Der Regler-Modus RM entspricht 2, wenn der Moment-Regler 15 dominant ist. In diesem Fall erfolgt bei Schritt S6 ein Wechsel in der Dominanz vom Moment-Regler 14 zur Bestimmungs-Einrichtung. Bei Schritt S7 wird zusätzlich die Grenzwert-Kurve (DBR) des maximal zulässigen ersten Signals ve1 adaptiert. In der Praxis entspricht dies zum Beispiel der Verringerung der maximal zulässigen Einspritzmenge. Bei Schritt S9 wird das erste Signal ve1 als das leistungsbestimmende Signal ve gesetzt. Danach wird bei Schritt S10 geprüft, ob der Fehler noch vorhanden ist. Ist dies der Fall, so wird das Verfahren bei Schritt S5 fortgesetzt. Wird bei Schritt S10 festgestellt, dass kein Fehler mehr vorhanden ist, so wird bei Schritt S11 mit Ablauf einer Zeitstufe der Fehler-Modus FM auf Null zurückgesetzt. Bei Schritt S12 wird in den Normal-Modus zurückgekehrt. Danach verzweigt der Programmablaufplan zum Punkt A und fährt mit dem Schritt S2 fort.

### Bezugzeichenliste

- 1: Brennkraftmaschine
- 2: Turbolader
- 3: Kraftstofftank
- 4: erste Pumpe
- 5: Drosselventil
- 6: zweite Pumpe
- 7: Hochdruckspeicher (Rail)
- 8: Injektor
- 9: Drucksensor
- 10: Rail-Drucksensor
- 11: Elektronisches Motorsteuergerät
- 12: Motorlast
- 13: Kupplung
- 14: Drehzahl-Regler
- 15: Moment-Regler
- 16: Auswahlmittel
- 17: Diagnoseblock
- 18: Funktionsblock Erfassen/Filtem
- 19: Drehzahlsensoren
- 20: Funktionsblock
- 21: Kennfelder
- 22: Minimalwert
- 23: Funktionsblock Berechnung P-Anteil
- 24: Funktionsblock Berechnung I-Anteil
- 25: Funktionsblock Berechnung D-Anteil
- 26: Summation
- 27: Minimalwert

## Patentansprüche

1. Verfahren zur steuerung einer Brennkrtfmaschine (1), deren Leistung über ein leistungsbestimmendes Signal (ve) eingestellt wird, indem aus einer Sollwertvorgabe (FP, nMOT(SW)) mittels einer Bestimmungs-Einrichtung (14, 20) ein erstes Signal (ve1) bestimmt wird, aus dem Motor-Moment (MK) mittels eines Moment-Reglers (15) ein zweites Signal (ve2) bestimmt wird (ve2=f(MK)) und mittels eines Auswahlmittels (16) die Bestimmungs-Einrichtung oder der Moment-Regler (15) als dominant für das leistungsbestimmende Signal (ve) gesetzt wird (ve=ve1; ve=ve2), wobei bei nicht plausiblen Werten des Motor-Moments (MK) ein Fehlermodus (FM) gesetzt wird (FM=1), mit Setzen des Fehlermodus (FM=1) bei dominanter Bestimmungs-Einrichtung (14, 20) die Dominanz beibehalten wird und bei dominantem Moment-Regler (15) ein Wechsel in der Dominanz durchgeführt wird.

2. Verfahren nach Anspruch 1, **dadurch gekennzeichnet, dass** bei gesetztem Fehlermodus (FM=1) der Wechsel der Dominanz vom Moment-Regler (15) zur Bestimmungs-Einrichtung (14, 20) gemäß einer Übergangsfunktion mittels eines Diagnoseblocks (17) durchgeführt wird.

3. Verfahren nach Anspruch 2, **dadurch gekennzeichnet, dass** gemäß der Übergangsfunktion das Motor-Moment (MK) vom letzten plausiblen Wert auf Null (MK=0) geführt wird.

4. Verfahren nach Anspruch 2, **dadurch gekennzeichnet, dass** gemäß der Übergangsfunktion das zweite Signal (ve2) vom letzten plausiblen Wert auf einen hohen Wert (ve2=MAX) geführt wird.

5. Verfahren nach Anspruch 3 oder Anspruch 4, **dadurch gekennzeichnet, dass** die Übergangsfunktion als mathematische oder Filterfunktion ausgeführt wird.

6. Verfahren nach einem der vorausgegangenen Ansprüche, **dadurch gekennzeichnet, dass** bei gesetztem Fehlermodus (FM=1) eine Grenzwertkurve (DBR) des maximal zulässigen ersten Signals (ve1) adaptiert wird.

7. Verfahren nach Anspruch 6, **dadurch gekennzeichnet, dass** die Grenzwert-Kurve (DBR) hin zu kleineren Werten des ersten Signals (ve1) adaptiert wird.

8. Verfahren nach einem der Ansprüche 1 bis 7, **dadurch gekennzeichnet, dass** der Fehlermodus (FM) zurückgesetzt wird (FM=0), wenn wieder plausible Werte des Motor-Moments (MK) detektiert werden und eine Zeitstufe (t) abgelaufen ist (t=0).

## Claims

1. Method for controlling an internal combustion engine (1) whose power is adjusted by means of a power-determining signal (ve) by a first signal (ve1) being determined from a predefined desired setting (FP, nMOT(SW)) by means of a determination device (14, 20), a second signal (ve2) being determined from the engine torque (MK) by means of a torque controller (15) (ve2=f(MK)), and the determination device or the torque controller (15) being set as being dominant for the power-determining signal (ve) by means of a selector means (16) (ve=ve1; ve=ve2), with a fault mode (FM) being set for implausible values of the engine torque (MK) (FM=1), and, with the fault mode being set (FM=1), dominance being maintained when the determination device (14, 20) is dominant, and dominance being changed over when the torque controller (15) is dominant.

2. Method according to Claim 1, **characterized in that**, when the fault mode is set (FM=1), dominance is changed over from the torque controller (15) to the determination device (14, 20) by means of a diagnostic block (17) in accordance with a transfer function.

3. Method according to Claim 2, **characterized in that** the engine torque (MK) is changed from the last plausible value to zero (MK=0) in accordance with the transfer function.

4. Method according to Claim 2, **characterized in that** the second signal (ve2) is changed from the last plausible value to a high value (ve2=MAX) in accordance with the transfer function.

5. Method according to Claim 3 or Claim 4, **characterized in that** the transfer function is in the form of a mathematical or filter function.

6. Method according to one of the preceding claims, **characterized in that** a limit-value curve (DBR) of the maximum permissible first signal (ve1) is adapted when the fault mode is set (FM=1).

7. Method according to Claim 6, **characterized in that** the limit-value curve (DBR) is adapted to smaller values of the first signal (ve1).

8. Method according to one of Claims 1 to 7, **characterized in that** the fault mode (FM) is reset (FM=0) if plausible values of the engine torque (MK) are detected again and a time (t) has elapsed (t=0).

## Revendications

1. Procédé de commande d'un moteur à combustion interne (1) dont la puissance est réglée au moyen d'un signal (ve) déterminant la puissance, par le fait qu'à partir d'une prescription (FP, nMOT(SW)) de valeur de consigne, on détermine au moyen d'un dispositif de détermination (14, 20) un premier signal (ve1), qu'à partir du couple moteur (MK), on détermine au moyen d'un régulateur de couple (15) un deuxième signal (ve2) (ve2= f (MK)), et que par l'intermédiaire d'un moyen de sélection (16), on pose le dispositif de détermination ou le régulateur de couple (15) comme étant dominant pour le signal (ve) déterminant la puissance (ve=ve1 ; ve=ve2), sachant qu'en cas de valeurs non plausibles du couple moteur (MK), on pose un mode d'erreur (FM) (FM=1), et qu'on conserve la dominance si le dispositif de détermination (14, 20) est dominant lorsque le mode d'erreur. (FM=1) est posé, tandis qu'on effectue un changement de la dominance si c'est le régulateur de couple (15) qui est alors dominant.

2. Procédé selon la revendication 1, **caractérisé en ce que**, lorsque le mode d'erreur (FM=1) est posé, le changement de dominance du régulateur de couple (15) au dispositif de détermination (14, 20) est effectué selon une fonction de transition au moyen d'un bloc de diagnostic (17).

3. Procédé selon la revendication 2, **caractérisé en ce que**, selon la fonction de transition, le couple moteur (MK) est amené de la dernière valeur plausible à zéro (MK=0).

4. Procédé selon la revendication 2, **caractérisé en ce que**, selon la fonction de transition, le deuxième signal (ve2) est amené de la dernière valeur plausible à une valeur élevée (ve2=MAX).

5. Procédé selon la revendication 3 ou 4, **caractérisé en ce que** la fonction de transition est conçue comme fonction mathématique ou comme fonction de filtrage.

6. Procédé selon l'une quelconque des revendications précédentes, **caractérisé en ce que**, lorsque le mode d'erreur (FM=1) est posé, une courbe de valeur limite (DBR) du premier signal (ve1) maximalement admissible est adaptée.

7. Procédé selon la revendication 6, **caractérisé en ce que** la courbe de valeur limite (DBR) est adaptée vers des valeurs inférieures du premier signal (ve1).

8. Procédé selon l'une quelconque des revendications 1 à 7, **caractérisé en ce que** le mode d'erreur (FM) est remis à zéro (FM=0) lorsque des valeurs plausibles du couple moteur (MK) sont à nouveau détectées et qu'un intervalle de temps (t) s'est écoulé (t=0).
